# EUROPEAN PATENT SPECIFICATION

(11) **EP 2 005 819 B1**
(45) Date of publication and mention of the grant of the patent: **18.09.2013**
(21) Application number: 07252552.0
(22) Date of filing: 22.06.2007
(51) Int. Cl.: A01K 1/00

(54) **Method and apparatus for cooling an animal**
Verfahren und Vorrichtung zum Kühlen eines Tieres
Procédé et appareil de refroidissement d'un animal

(43) Date of publication of application: 24.12.2008
(60) Divisional application: 11166359.7
(73) Proprietor: DeLaval Holding AB, 147 21 Tumba (SE)
(72) Inventor: Manneke, Peter, 18910 Beit-Hashita (IL)
(74) Representative: Hällgren, Christer

(56) References cited:
- EP-A- 1 230 851
- EP-A- 1 260 137
- WO-A-01/10197
- WO-A-98/04121
- US-B1- 6 418 728

## Description

The present invention relates to apparatus for cooling an animal, in particular a cow.

It is well known that the milk productivity of an animal, such as a cow, is adversely affected by high ambient temperatures which result in the animal suffering from thermal discomfort or heat stress. For example, the current Holstein breed of cows, which is widely used by the dairy industry across the world, are known to begin suffering the affects of heat stress at temperatures around 15°C. However, ambient temperatures in excess of 35°C are frequently experienced in many regions of the world where dairy farming is undertaken (for example, Israel and the USA) and, in order to avoid an undue reduction in milk productivity as a result, it is common for cooling systems to be used in an attempt to maintain heat stress at an acceptable level.

A cooling system currently used in Israel and the USA makes use of a sprinkler system which distributes water droplets on the back and sides of a cow. A cow is typically subjected to a water flow rate of between 20 litres per minute and 25 litres per minute for between 40 and 50 seconds. The sprinkler system is of a type that produces large droplets of water which impact on the fur of the cow with a tendency to flatten the fur and reduce its thickness. In this way, the water droplets tend to soak through to the skin of the animal and tend to displace warm air trapped between the fur and the skin. This in turn reduces the insulation effect provided by the fur.

Also, in addition to the sprinkler system, high capacity cooling fans constantly blow air across the wetted skin of the animal so as to assist in evaporating the water. This further improves the cooling effect.

The aim of the sprinkler and fan cooling system is to reduce the temperature of the cow by 1°C. This can take almost one hour and is undertaken prior to milking and up to five to six times a day.

This prior art cooling system, generally has a cooling area located prior to the milking stall so that a cow may be cooled and thereby made more comfortable before being milked. However, once milking has been completed, the cow is generally released directly to a feeding/resting area. This can be problematic, particularly where the temperature of the cow has increased above an acceptable level.

In areas of the world where ambient temperatures are not consistently so high as to require a cow to be routinely cooled, it is known to monitor the level of heat stress experienced by a cow and to take a decision as to whether or not cooling is necessary at the present time. This decision is taken on the basis of whether or not a predetermined acceptable level of heat stress is exceeded. If it is determined that a cow should be cooled, then the particular means provided for cooling the animal will be operated until it is determined that the level of heat stress has reduced to within acceptable limits.

Known apparatus for cooling a cow is disclosed in EP 1 119 237 B1. This prior art apparatus comprises means for wetting an animal and for directing an airflow over the wetted part of the animal.

It will be understood that these prior art methods and apparatus (for use in cooler regions of the world) merely assess whether or not cooling is required so that a decision can be made as to whether or not cooling should begin. No decision is made as to whether one particular method of cooling will be more effective than another method of cooling for the particular animal in question or for the particular symptoms of heat stress being presented. Accordingly, the method of cooling employed may well be inefficient in view of the particular condition of the animal or in view of the particular environmental conditions to which the animal is exposed.

These prior art methods and apparatus also require a continuous or repeated monitoring of the level of stress experienced by an animal so that a further decision may be taken as to whether or not cooling is required. In this respect, where milking is an automated process in which an Automatic Milking Station (AMS) is used (in other words, where milking is undertaken in a milking station provided with a robot for attaching teat cups to the teats of an animal), it may well be the case that the condition of the particular animal to be milked can only be fully determined when the animal has entered the AMS and is stood adjacent various condition sensing devices. Although prior art methods of cooling the animal may be employed whilst the animal remains in the AMS, it will not be possible for the condition of the animal to be continuously or repeatedly determined once the animal has left the AMS. As such, once the animal has left the AMS, it is not possible for the animal to be cooled in a controlled fashion with reference to its present condition. This can potentially result in the animal being insufficiently cooled, which may result in continued thermal discomfort. Milk productivity is adversely affected as a result.

It is an object of the present invention to address the aforementioned problems with the prior art.

The present invention provides apparatus for undertaking a method of increasing the milk productivity of an animal, in particular a cow, the method comprising the step of (a) determining the condition of the animal and/or of the environment in which the animal is located; and being characterised by the further steps of: (b) selecting a method of cooling the animal, which comprises selecting one or more of a plurality of cooling techniques available for cooling the animal wherein said plurality of available cooling techniques comprises (i) wetting the animal; (ii) blowing air over the animal; (iii) wetting the animal and blowing air over the wet parts of the animal; and (iv) reducing the temperature of ambient air in the vicinity of the animal, and wherein the selected cooling method is chosen on the basis of said determined condition; and (c) cooling the animal with the selected cooling method.

In accordance with the present invention, the condition of an animal may be determined and, on the basis of this condition, a method of cooling the animal may be selected. It will be understood that the condition of the animal may be determined, at least in part, by reference to the medical history of the particular animal in question (in other words, by reference to medical events and health problems the animal has experienced) and any known ongoing medical factors associated with that animal (e.g. pregnancy). For instance, it may be known that the particular animal in question is adversely affected by a cooling of one specific area of its body (perhaps because of an injury sustained to that specific area) and, in view of this, the method selected for cooling the animal may be one which avoids said specific area of the animal.

It will also be understood that, in view of the condition of the animal, the cooling method may be selected so as to improve the thermal comfort of the animal in the most efficient way. Also, the selection of the cooling method is such that, upon implementation of the method, the condition (for example, the thermal comfort) of the animal will be brought to within an acceptable limit. In other words, the effectiveness of the cooling method is predicted as being sufficient to achieve the desired amount of cooling and it is not therefore necessary for the condition of the animal to be continuously or repeatedly monitored. This allows the cooling method to be implemented, at least in part, when it is not possible to sense the condition of the animal (for example, when a cow has left an AMS).

It will also be understood that the environmental conditions in which an animal is located may influence the cooling method to be used and the selected cooling method may be chosen on the basis of the environmental conditions *per se* or in combination with the determined condition of the animal in question.

Preferably, the step of selecting a method of cooling comprises the step of selecting the duration of cooling required in order to bring the condition to within an acceptable limit. The step of selecting a method of cooling comprises the step of selecting one or more of a plurality of cooling techniques available for cooling the animal. The one or more selected cooling techniques may be chosen in order to bring the condition of the animal to within an acceptable limit within a predetermined acceptable period of time. Said plurality of available cooling techniques comprises (i) wetting the animal; (ii) blowing air over the animal; (iii) wetting the animal and blowing air over the wet parts of the animal; and (iv) reducing the temperature of ambient air in the vicinity of the animal.

Furthermore, said plurality of available cooling techniques may comprise cooling an area of the animal comprising the back and/or sides of the animal by flowing a fluid over said area. Ideally said fluid is air. Alternatively, said fluid may comprise water. Nevertheless, said fluid may initially comprise water, so as to wet said area of the animal, and may then be air, so as to evaporate said water from said area.

Preferably, the water may be entrained in a flow of air. Also, the air may have been cooled so as to have a temperature below that of the ambient air. Also, the water may have been cooled so as to have a temperature below that of the ambient air.

It is particularly preferable for the condition of the animal to be determined with reference to a signal sent from a transmitter carried by the animal. It is preferable for this signal to indicate the temperature of the animal's skin and/or udder. Ideally, the transmitter is carried *in vivo* by the animal and may be a bolus. The signal sent by the transmitter may be a radio frequency signal. Also, it will be understood that the condition of the animal may be the level of thermal comfort of the animal. The condition of the animal may be determined with reference to the respiration rate of the animal. Also, the condition of the animal is preferably determined when the animal is located in a milking stall. The animal may be cooled with the selected cooling method in the milking stall. Ideally, the animal is cooled before entering the milking stall. The animal may be cooled with the selected cooling method after having left the milking stall. Furthermore, the animal may be cooled after having left the milking stall as well as before entering the milking stall, said cooling ideally being completed on both occasions with the animal located in substantially the same area. In these circumstances, the animal may also be cooled after leaving the milking stall with the selected cooling method. It will be understood that the same cooling facility (for example, the same cooling yard) may be used to cool the animal both before and after milking (i.e. before the animal enters the milking stall and after the animal leaves the milking stall). Passage of the animal from the milking stall to the cooling area may be controlled (for example, by means of one or more gates) so that the animal is only directed to the cooling area if cooling is determined as being required.

Described hereinafter is a method comprising the steps of:
(i) cooling an animal, in particular a cow, in a cooling facility;
(ii) milking said animal;
(iii) determining whether further cooling of the animal is required; and
(iv) returning the animal to said cooling facility if further cooling is determined as being required.

Ideally the method comprises the step of:
(v) further cooling the returned animal in said cooling facility.
Apparatus is provided for undertaking the aforementioned methods.

Apparatus may be provided for automatically undertaking the aforementioned methods.

A milking facility is also described for milking an animal, in particular a cow, the milking facility comprising: a cooling area comprising means for cooling an animal; a milking area comprising means for milking an animal; an animal control means for controlling the route along which an animal is able to walk, the cooling and milking areas being located so that an animal is able to walk from the cooling area to the milking area during use of the facility; wherein the control means selectively directs an animal back to said cooling area after milking of the animal in the milking area.

Ideally, the milking facility further comprises means for determining whether or not cooling of the animal is required. It is also preferable for said control means to direct an animal back to said cooling area in response to a determination from said determining means that cooling of the animal is required. The determining means may comprise a receiver for receiving an RF signal transmitted by a transmitter carried by an animal.

It will be understood that the present invention has the advantage over the prior art of providing a method and apparatus which cools an animal in the most appropriate fashion having regard to the need for efficiency and to the health of the animal in question. A necessary cooling is also provided without the need for continuous or repeated monitoring of the animal as in the prior art. In this latter regard, it will be understood that the present invention allows the condition of an animal to be changed, and thereby brought to within acceptable parameters, without the need for a feedback system which assesses the condition of the animal during the cooling process so as to determine whether or not the cooling process should continue.

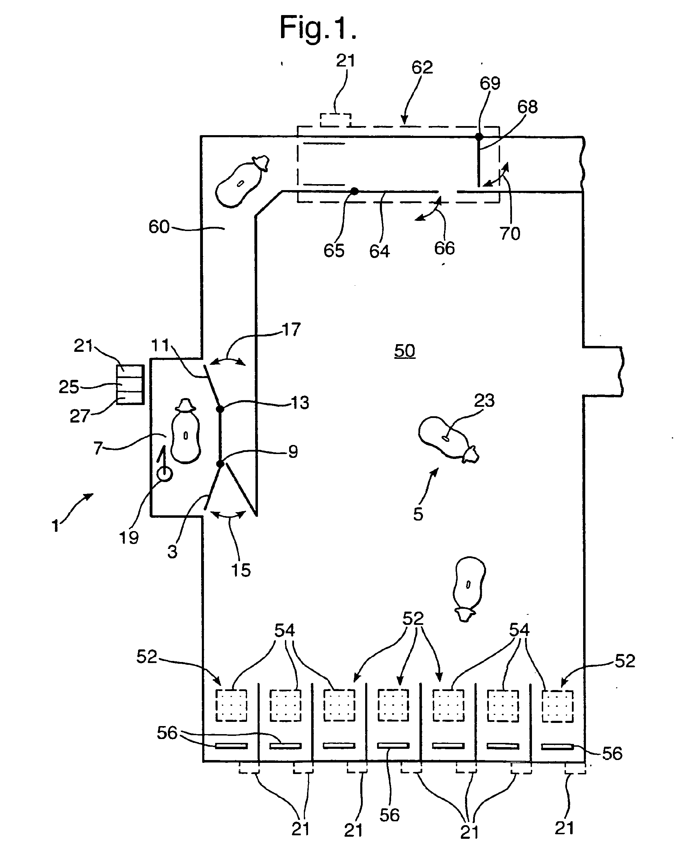

An embodiment of the present invention will now be described with reference to the accompanying drawing (Figure 1) which shows a plan view of a milking facility comprising an Automatic Milking Station (AMS).

A schematic plan view of a milking facility according to the present invention is shown in Figure 1 of the accompanying drawings. The facility has a milking area 1 comprising features characteristic of a conventional AMS, as will be understood by those skilled in the art. In this regard, an entry gate 3 is provided for allowing a cow 5 to enter a milking stall 7. The entry gate 3 automatically rotates about a hinge 9 into an open position, when the milking stall 7 is unoccupied, so as to allow access to the milking stall 7. Once a cow 5 enters the milking stall 7, the entry gate 3 rotates about the hinge 9 into a closed position behind the cow 5. An exit gate 11 is also provided and automatically rotates about a hinge 13 into an open position once milking of the cow 5 has been completed.

The entry and exit gates 3, 11 are shown located in their closed positions in Figure 1, however the movement of these gates 3, 11 about their respective hinges 9, 13 is indicated by arrows 15, 17.

As will be understood by those skilled in the art, when the cow 5 is positioned within the milking stall 7, the milking of the animal is completed in an entirely automatic fashion. Firstly, detectors/sensors search for the teats so as to determine their location. Teat cups are then attached to the teats by means of a robot arm 19. The milking operation is then begun and is monitored by various sensors (for example, a milk meter, conductivity sensors, and temperature sensors). Finally, the teat cups are automatically detached once the milking operation has been completed. The completion of the milking operation is itself determined by means of one or several sensors. A complete record of the milking operation (including all measured parameters, such as conductivity) is stored in a computer. A record of information relating to all previous milking operations from previous lactations, and for all animals in a herd, is established. This may also include information entered manually into the computer by a farmer (such as when a specific animal was inseminated and when the animal is expected to give birth). In this way, the medical history and past performance of every animal in a herd may be kept up to date and made readily available.

Once milking has been completed, the exit gate 11 opens as mentioned above so as to allow the cow 5 to leave the milking stall 7. Once the milking stall 7 has been vacated, the exit gate 11 is returned to its closed position as shown in Figure 1 and the entry gate 3 will be moved to its open position so as to allow a further cow to enter the stall 7.

The milking facility shown in Figure 1 further comprises a cooling area 50 through which a cow 5 must walk in order to gain access to the milking area 1. The cooling area 50 comprises a number of cooling bays 52 (seven are shown) which each have an over-head sprinkler 54 for dispensing large droplets of water onto the back and/or sides of a cow located in the cooling bay. Each bay 52 also has a high capacity cooling fan 56 for blowing air over the back and/or sides of the cow located in the bay 52. A transmitter/receiver may also be provided with each bay 52. One purpose of the transmitters/receivers is to allow the particular cow located in any given bay 52 to be identified. The transmitters/receivers are discussed in more detail below.

In addition to the cooling bays 52, or as an alternative thereto, the cooling area 50 may be provided with a sprinkler and cooling fan system for cooling the entire cooling area 50. In this way, a cow does not need to be positioned in a particular bay 52 in order to be cooled.

Each sprinkler has an output capacity of between 20 litres per minute and 25 litres per minute, and water droplets are typically sprayed onto the back and/or the sides of a cow at this flow rate for between 40 and 50 seconds. The high capacity cooling fans run constantly so as to assist in evaporating water from the skin of the cow.

It will be appreciated that the milking area 1 may also be provided with a sprinkler and fan cooling system, however, given the volume and flow rate of water involved in the cooling process, the use of this type of cooling system in an Automated Milking System is not desirable (primarily because of the proximity of electrical components).

The milking facility shown in Figure 1 is arranged so that, on leaving the milking area 1, a cow 5 is directed along a walk way 60 to a Smart Selection Gate (SSG) 62. The Smart Selection Gate 62 allows the cow 5 to be either directed back to the cooling area 50 by means of a first gate 64 (rotatable about a hinge 65 in the direction indicated by arrow 66) or to a further holding area (not shown) by means of a second gate 68 (rotatable about a hinge 69 in the direction indicated by arrow 70).

In accordance with the present invention, the facility shown in Figure 1 is provided with a transmitter/receiver (positioned at one or more of the locations identified by reference numeral 21 in the accompanying drawings). Each transmitters/receivers is adapted for receiving a radio frequency signal transmitted from a bolus 23 carried *in vivo* by a cow 5. The radio frequency signal transmitted by the bolus 23 to the transmitter/receiver provides a body temperature measurement for the cow 5 and an indication of the thermal discomfort experienced by the cow 5.

The bolus 23 is capable of sensing a number of parameters. These parameters include the animal's body temperature, heart rate, and respiration rate. However, since the bolus is located in the stomach of the animal, if the particular animal condition to be determined is skin temperature or udder temperature, then an appropriate adjustment to the body temperature measurement obtained from the bolus may be required. Alternatively, suitable temperature sensors may be attached to the skin and/or udder of the animal in order to acquire a skin/udder temperature measurement. These temperature sensors may be carried by an animal as an alternative to the bolus or in addition to the bolus.

The milking facility may also be provided with means for assessing the activity of a cow. In this regard, it is known that a cow under heat stress will tend to exhibit an increased level of activity. Specifically, the number of steps taken by a cow in a given period of time will tend to increase as the cow becomes increasingly agitated by thermal discomfort. This indication of heat stress can be measured through the use of pressure sensors or weighing devices provided in the floor of the milking facility. More specifically, a pressure sensor or weighing device may be provided in the floor of the milking stall 7 under each foot of the animal. A total of four devices would be thereby provided for sensing and recording the movement of an animal being milked. If a high number of steps is measured, then it may be determined on this basis that the animal is experiencing a condition of heat stress.

The measured activity of an animal may be considered in combination with temperature measurements in order to determine the condition of the animal and allow the animal to be returned to the cooling area 50 for appropriate cooling as necessary. It will be understood that further parameters in addition to the animal's temperature and/or activity will allow the level of thermal discomfort to be determined and, when considered in combination with the temperature and/or activity measurements, may potentially allow for a more accurate determination to be made. In this latter regard, reference may be made to the milk yield of a particular cow so as to provide an indication of whether or not heat stress is being experienced. For example, the milk yield for a particular cow may be unusually low when compared with a recorded history of milk yield for that animal. Also, historical records may indicate that a particularly low level of milk yield is generally associated with an unacceptable level of thermal discomfort for the animal in question. Accordingly, measured values of milk yield may provide a further parameter for allowing the condition of an animal to be determined and an assessment of the cooling requirement to be made.

The cow 5 is also provided with a radio frequency identification (RFID) tag which may be interrogated by the or each transmitter/receiver. The RFID tag (not shown) allows a particular cow 5 to be identified and this, if deemed necessary, allows reference to be made to the medical history and past performance (e.g. milk yield) of the cow 5. Both of the RF signals (received from the bolus 23 and the RFID tag) allow the condition of the cow 5 to be determined so that the cow 5 can be directed back to a cooling area as necessary and so that an appropriate method for cooling the cow 5 can be selected.

The facility also includes sensors 25 for detecting the ambient environmental conditions (for example, temperature, pressure and humidity).

It will be understood therefore that the or each transmitter/receiver allows a determination of the condition of a particular cow, whilst the sensors 25 determine the ambient conditions generally affecting cows located in the vicinity of the facility.

Once the particular condition of the cow 5 located within the milking stall 7 has been determined and the ambient environmental conditions have also been determined, a suitable cooling regime is automatically selected by a control system 27. Typically, the control system 27 will comprise an electronic control system which will be an integral part of the control system of the AMS.

The control system 27 is arranged to select one or more of a number of techniques for cooling the cow 5 depending upon the ambient conditions and the condition of the particular cow 5 in question.

In this latter regard, it may be determined on interrogating the RFID tag that the cow 5 located in the milking stall 7 has a particular medical condition which will affect the cooling method to be used. For example, the cow may be pregnant. As such, the control system 27 will select a tailored cooling regime for the cow 5. If it is determined that more cooling is required after milking, then the Smart Selection Gate 62 will be operated automatically so as to direct the cow in question back to the cooling area 50. This is achieved by opening the first gate 64 and closing the second gate 68. Both gates 64, 68 are shown closed in Figure 1.

The cooling method selected by the control system 27 may also include the length of time the cow 5 is to be subjected to the or each cooling technique. If cooling is undertaken during the milking process and it is determined that milking will have finished before the condition of the cow 5 has been brought to within an acceptable limit, then the chosen cooling method will include one or more cooling techniques applied to the cow once it has left the milking stall 7. It will be appreciated that the period of time the cow 5 is subjected to a cooling technique is selected so as to ensure the condition (for example, thermal comfort) of the cow 5 is brought to within an acceptable limit.

The facility shown in Figure 1 determines the level of heat stress of a cow by reference to the body temperature of the animal, which is measured by a bolus carried *in vivo.* The bolus 23 transmits temperature data upon interrogation by one of the aforementioned external transmitter/receiver (as described above). However, the bolus 23 may transmit data indicative of the animal's respiration rate, either instead of or in addition to the temperature data. The respiration rate of a cow is known to indicate the level of heat stress experienced by the cow. As will be understood by those skilled in the art, the respiration rate may also be determined by means of a laser device located externally to the cow.

The present invention is not limited to the specific embodiment described above. Alternative arrangements will be apparent to a reader skilled in the art. For example, the milking area may be operated manually rather than automatically as an AMS.

## Claims

1. Apparatus for undertaking a method of increasing the milk productivity of an animal, in particular a cow (5), the method comprising the step of (a) determining the condition of the animal and/or of the environment in which the animal is located; and being **characterised by** the further steps of: (b) selecting a method of cooling the animal, which comprises selecting one or more of a plurality of cooling techniques available for cooling the animal (5) wherein said plurality of available cooling techniques comprises (i) wetting the animal (5); (ii) blowing air over the animal (5); (iii) wetting the animal (5) and blowing air over the wet parts of the animal (5); and (iv) reducing the temperature of ambient air in the vicinity of the animal (5), and wherein the selected cooling method is chosen on the basis of said determined condition; and (c) cooling the animal with the selected cooling method.

2. Apparatus as claimed in claim 1, wherein the step of selecting a method of cooling comprises the step of selecting the duration of cooling required in order to bring the condition of the animal (5) to within an acceptable limit.

3. Apparatus as claimed in claim 1 or 2, wherein the one or more selected cooling techniques are chosen in order to bring the condition of the animal to within an acceptable limit within a predetermined acceptable period of time.

4. Apparatus as claimed in any of the preceding claims, wherein said plurality of available cooling techniques comprises cooling an area of the animal (5) comprising the back and/or sides of the animal (5) by flowing a fluid over said area.

5. Apparatus as claimed in claim 4, wherein said fluid is air.

6. Apparatus as claimed in claim 4, wherein said fluid comprises water.

7. Apparatus as claimed in claim 4, wherein said fluid initially comprises water, so as to wet said area of the animal (5), and is then air, so as to evaporate said water from said area.

8. Apparatus as claimed in claim 6 or 7, wherein said water is entrained in a flow of air.

9. Apparatus as claimed in any of claims 5, 7 and 8, wherein said air has been cooled so as to have a temperature below that of the ambient air.

10. Apparatus as claimed in any of claims 6, 7 and 8, wherein said water has been cooled so as to have a temperature below that of the ambient air.

11. Apparatus as claimed in any of the preceding claims, wherein the condition of the animal (5) is determined with reference to a signal sent from a transmitter (23) carried by the animal (5).

12. Apparatus as claimed in claim 11, wherein the signal sent from the transmitter (23) indicates the temperature of the animal's skin and/or udder.

13. Apparatus as claimed in claim 11 or 12, wherein the transmitter (23) is carried *in vivo* by the animal (5).

14. Apparatus as claimed in any of the claims 11, 12 and 13, wherein the transmitter is a bolus (23).

15. Apparatus as claimed in any of claims 11 to 14, wherein the signal sent by the transmitter (23) is a radio frequency signal.

16. Apparatus as claimed in any of the preceding claims, wherein the condition of the animal (5) is the level of thermal comfort of the animal (5).

17. Apparatus as claimed in any of the preceding claims, wherein the condition of the animal (5) is determined with reference to the respiration rate of the animal (5).

18. Apparatus as claimed in any of the preceding claims, wherein the condition of the animal (5) is determined when the animal (5) is located in a milking stall (7).

19. Apparatus as claimed in claim 18, wherein the animal (5) is cooled with the selected cooling method in the milking stall (7).

20. Apparatus as claimed in claim 18 or 19, wherein the method includes the step of cooling the animal (5) before entering the milking stall (7).

21. Apparatus as claimed in any of claims 18, 19 and 20, wherein the animal (5) is cooled with the selected cooling method after having left the milking stall (7).

22. Apparatus as claimed in claim 20, wherein the method includes the step of cooling the animal (5) after having left the milking stall (7) as well as before entering the milking stall (7), said cooling being completed with the animal (5) located in substantially the same area.

23. Apparatus as claimed in claim 22, wherein the animal (5) is cooled after leaving the milking stall (7) with the selected cooling method.

24. Apparatus according to any one of the preceding claims, wherein the apparatus is suitable for automatically undertaking the method.

## Patentansprüche

1. Vorrichtung zum Durchführen eines Verfahrens zum Erhöhen der Milchleistung eines Tiers, insbesondere einer Kuh (5), wobei das Verfahren den Schritt (a) des Ermittelns des Zustands des Tiers und/oder der Umgebung umfasst, in der sich das Tier befindet; und durch die weiteren Schritte gekennzeichnet ist: (b) Auswählen eines Verfahrens zum Kühlen des Tiers, was das Auswählen von einem oder mehreren aus einer Vielzahl von verfügbaren Kühlverfahren zum Kühlen des Tiers (5) umfasst, wobei die Vielzahl verfügbarer Kühlverfahren (i) das Benetzen des Tiers (5); (ii) das Blasen von Luft über das Tier (5); (iii) das Benetzen des Tiers (5) und Blasen von Luft über die nassen Teile des Tiers (5) und (iv) das Senken der Temperatur von Umgebungsluft in der Nähe des Tiers (5) umfasst, und wobei das ausgewählte Kühlverfahren auf der Grundlage des ermittelten Zustands ausgewählt wird; und (c) Kühlen des Tiers mit dem ausgewählten Kühlverfahren.

2. Vorrichtung nach Anspruch 1, wobei der Schritt des Auswählens eines Kühlverfahrens den Schritt des Auswählens der Kühldauer umfasst, die erforderlich ist, um den Zustand des Tiers (5) innerhalb eines annehmbaren Grenzwerts zu bringen.

3. Vorrichtung nach Anspruch 1 oder 2, wobei das eine oder die mehreren ausgewählten Kühlverfahren ausgewählt sind, um den Zustand des Tiers innerhalb eines festgelegten annehmbaren Zeitraums innerhalb eines annehmbaren Grenzwerts zu bringen.

4. Vorrichtung nach einem der vorhergehenden Ansprüche, wobei die Vielzahl verfügbarer Kühlverfahren das Kühlen eines Bereichs des Tiers (5) umfasst, der den Rücken und/oder die Seiten des Tiers (5) umfasst, indem ein Fluid über den Bereich fließengelassen wird.

5. Vorrichtung nach Anspruch 4, wobei das Fluid Luft ist.

6. Vorrichtung nach Anspruch 4, wobei das Fluid Wasser umfasst.

7. Vorrichtung nach Anspruch 4, wobei das Fluid zu Beginn Wasser umfasst, um den Bereich des Tiers (5) zu benetzen, und dann Luft ist, um das Wasser von dem Bereich verdunsten zu lassen.

8. Vorrichtung nach Anspruch 6 oder 7, wobei das Wasser in einem Luftstrom mitgerissen wird.

9. Vorrichtung nach einem der Ansprüche 5, 7 und 8, wobei die Luft gekühlt wurde, um eine Temperatur unter der der Umgebungsluft aufzuweisen.

10. Vorrichtung nach einem der Ansprüche 6, 7 und 8, wobei das Wasser gekühlt wurde, um eine Temperatur unter der der Umgebungsluft aufzuweisen.

11. Vorrichtung nach einem der vorhergehenden Ansprüche, wobei der Zustand des Tiers (5) bezogen auf ein Signal ermittelt wird, das von einem Sender (23) gesendet wird, den das Tier (5) trägt.

12. Vorrichtung nach Anspruch 11, wobei das Signal, das von dem Sender (23) gesendet wird, die Temperatur der Haut und/oder des Euters des Tiers angibt.

13. Vorrichtung nach Anspruch 11 oder 12, wobei der Sender (23) von dem Tier (5) *in vivo* getragen wird.

14. Vorrichtung nach einem der Ansprüche 11, 12 und 13, wobei der Sender ein Bolus (23) ist.

15. Vorrichtung nach einem der Ansprüche 11 bis 14, wobei das von dem Sender (23) gesendete Signal ein Funksignal ist.

16. Vorrichtung nach einem der vorhergehenden Ansprüche, wobei der Zustand des Tiers (5) das Maß für die thermische Behaglichkeit des Tiers (5) ist.

17. Vorrichtung nach einem der vorhergehenden Ansprüche, wobei der Zustand des Tiers (5) bezogen auf die Atemfrequenz des Tiers (5) ermittelt wird.

18. Vorrichtung nach einem der vorhergehenden Ansprüche, wobei der Zustand des Tiers (5) ermittelt wird, wenn sich das Tier (5) an einem Melkplatz (7) befindet.

19. Vorrichtung nach Anspruch 18, wobei das Tier (5) mit dem ausgewählten Kühlverfahren an dem Melkplatz (7) gekühlt wird.

20. Vorrichtung nach Anspruch 18 oder 19, wobei das Verfahren den Schritt des Kühlens des Tiers (5) umfasst, bevor es den Melkplatz (7) betritt.

21. Vorrichtung nach einem der Ansprüche 18, 19 und 20, wobei das Tier (5) mit dem ausgewählten Kühlverfahren gekühlt wird, nachdem es den Melkplatz verlassen hat.

22. Vorrichtung nach Anspruch 20, wobei das Verfahren den Schritt des Kühlens des Tiers (5) umfasst, nachdem es den Melkplatz (7) verlassen hat und bevor es den Melkplatz (7) betritt, wobei das Kühlen abgeschlossen ist, während sich das Tier (5) im Wesentlichen in demselben Bereich befindet.

23. Vorrichtung nach Anspruch 22, wobei das Tier (5) mit dem ausgewählten Kühlverfahren gekühlt wird, nachdem es den Melkplatz (7) verlassen hat.

24. Vorrichtung nach einem der vorhergehenden Ansprüche, wobei sich die Vorrichtung zum automatischen Durchführen des Verfahrens eignet.

## Revendications

1. Appareil pour exécuter un procédé d'augmentation de la productivité laitière d'un animal, en particulier d'une vache (5), le procédé comprenant l'étape consistant à (a) déterminer l'état de l'animal et/ou de l'environnement dans lequel l'animal se trouve ; et **caractérisé par** les étapes supplémentaires consistant à : (b) sélectionner un procédé de refroidissement de l'animal, ce qui comprend la sélection de l'une ou de plusieurs d'une pluralité de techniques de refroidissement disponibles pour refroidir l'animal (5) dans lequel ladite pluralité de techniques de refroidissement disponibles comprend (i) mouiller l'animal (5) ; (ii) souffler de l'air sur l'animal (5) ; (iii) mouiller l'animal (5) et souffler de l'air sur les parties mouillées de l'animal (5) ; et (iv) réduire la température de l'air ambiant à proximité de l'animal (5), et dans lequel le procédé de refroidissement sélectionné est choisi sur la base dudit état déterminé ; et (c) refroidir l'animal avec le procédé de refroidissement sélectionné.

2. Appareil selon la revendication 1, dans lequel l'étape consistant à sélectionner un procédé de refroidissement comprend l'étape consistant à sélectionner la durée de refroidissement requise pour amener l'état de l'animal (5) dans une limite acceptable.

3. Appareil selon la revendication 1 ou 2, dans lequel l'une ou les plusieurs techniques de refroidissement sélectionnées sont choisies pour amener l'état de l'animal dans une limite acceptable en l'espace d'une période de temps acceptable prédéterminée.

4. Appareil selon l'une quelconque des revendications précédentes, dans lequel ladite pluralité de techniques de refroidissement disponibles comprend le refroidissement d'une zone de l'animal (5) comprenant le dos et/ou les flancs de l'animal (5) en faisant s'écouler un fluide sur ladite zone.

5. Appareil selon la revendication 4, dans lequel ledit fluide est de l'air.

6. Appareil selon la revendication 4, dans lequel ledit fluide comprend de l'eau.

7. Appareil selon la revendication 4, dans lequel ledit fluide comprend au début de l'eau, de façon à mouiller ladite zone de l'animal (5), puis est de l'air, de façon à ce que ladite eau s'évapore de ladite zone.

8. Appareil selon la revendication 6 ou 7, dans lequel ladite eau est entraînée dans un flux d'air.

9. Appareil selon l'une quelconque des revendications 5, 7 et 8, dans lequel ledit air a été refroidi de façon à avoir une température inférieure à celle de l'air ambiant.

10. Appareil selon l'une quelconque des revendications 6, 7 et 8, dans lequel ladite eau a été refroidie de façon à avoir une température inférieure à celle de l'air ambiant.

11. Appareil selon l'une quelconque des revendications précédentes, dans lequel l'état de l'animal (5) est déterminé en référence à un signal envoyé depuis un émetteur (23) porté par l'animal (5).

12. Appareil selon la revendication 11, dans lequel le signal envoyé depuis l'émetteur (23) indique la température de la peau et/ou de la mamelle de l'animal.

13. Appareil selon la revendication 11 ou 12, dans lequel l'émetteur (23) est porté *in vivo* par l'animal (5).

14. Appareil selon l'une quelconque des revendications 11, 12 et 13, dans lequel l'émetteur est un bolus (23).

15. Appareil selon l'une quelconque des revendications 11 à 14, dans lequel le signal envoyé par l'émetteur (23) est un signal radioélectrique.

16. Appareil selon l'une quelconque des revendications précédentes, dans lequel l'état de l'animal (5) est le niveau de confort thermique de l'animal (5).

17. Appareil selon l'une quelconque des revendications précédentes, dans lequel l'état de l'animal (5) est déterminé en référence à la fréquence de respiration de l'animal (5).

18. Appareil selon l'une quelconque des revendications précédentes, dans lequel l'état de l'animal (5) est déterminé lorsque l'animal (5) se trouve dans une stalle de traite (7).

19. Appareil selon la revendication 18, dans lequel l'animal (5) est refroidi avec le procédé de refroidissement sélectionné dans la stalle de traite (7).

20. Appareil selon la revendication 18 ou 19, dans lequel le procédé comprend l'étape consistant à refroidir l'animal (5) avant qu'il n'entre dans la stalle de traite (7).

21. Appareil selon l'une quelconque des revendications 18, 19 et 20, dans lequel l'animal (5) est refroidi avec le procédé de refroidissement sélectionné après avoir quitté la stalle de traite (7).

22. Appareil selon la revendication 20, dans lequel le procédé comprend l'étape consistant à refroidir l'animal (5) après qu'il a quitté la stalle de traite (7) ainsi qu'avant qu'il n'entre dans la stalle de traite (7), ledit refroidissement étant terminé avec l'animal (5) se trouvant dans pratiquement la même zone.

23. Appareil selon la revendication 22, dans lequel l'animal (5) est refroidi avec le procédé de refroidissement sélectionné après avoir quitté la stalle de traite (7).

24. Appareil selon l'une quelconque des revendications précédentes, dans lequel l'appareil est apte à exécuter automatiquement le procédé.
